(19) Europäisches Patentamt

European Patent Office

Office européen des brevets

(11) Veröffentlichungsnummer: **0 147 671 B1**

(12) # EUROPÄISCHE PATENTSCHRIFT

(45) Veröffentlichungstag der Patentschrift: **10.07.91**

(51) Int. Cl.⁵: **B60T 8/88**

(21) Anmeldenummer: **84114643.4**

(22) Anmeldetag: **01.12.84**

(54) **Überwachungseinrichtung in einem mit einem Antiblockierregelsystem versehenen Fahrzeugbremssystem.**

(30) Priorität: **07.12.83 DE 3344183**

(43) Veröffentlichungstag der Anmeldung:
**10.07.85 Patentblatt 85/28**

(45) Bekanntmachung des Hinweises auf die Patenterteilung:
**10.07.91 Patentblatt 91/28**

(84) Benannte Vertragsstaaten:
**AT FR GB IT SE**

(56) Entgegenhaltungen:
| | |
|---|---|
| EP-A- 0 005 568 | DE-A- 1 555 132 |
| DE-A- 3 237 959 | FR-A- 1 359 829 |
| FR-A- 2 241 709 | GB-A- 2 158 905 |

(73) Patentinhaber: **ROBERT BOSCH GMBH**
**Postfach 50**
**W-7000 Stuttgart 1(DE)**

(72) Erfinder: **Gerstenmeier, Jürgen, Dipl.-Ing.**
**Veilchenweg 6**
**W-7129 Ilsfeld(DE)**
Erfinder: **Leiber, Heinz, Ing. (grad.)**
**Theodor-Heuss-Strasse 34**
**W-7141 Oberriexingen(DE)**

(74) Vertreter: **Kammer, Arno, Dipl.-Ing.**
**ROBERT BOSCH GmbH Zentralabteilung Patente Postfach 50**
**W-7000 Stuttgart 1(DE)**

## Beschreibung

Die Erfindung betrifft eine Überwachungseinrichtung mit den Merkmalen des Oberbegriffs des Anspruchs 1.

Aus der DE-A1-3237959 ist ein derartiges Bremssystem samt Überwachung bekannt. Dort ist ein Warnschalter vorgesehen, der als Öffner ausgebildet ist und z.B. sofort warnt, wenn ein Signalleitung unterbrochen wird und wenn der zu überwachende Druck unter die Schwelle absinkt.

Der Erfindung liegt die Aufgabe zugrunde die Warneinrichtung zu verbessern, um zu vermeiden, daß bei einer Störung in der Warneinrichtung trotz absinkenden Drucks eine Warnung oder Abschaltung nicht zustande kommt.

Diese Aufgabe wird durch die Merkmale des Anspruchs 1 gelöst.

Weitere Verbesserungen und Ausgestaltungen ergeben sich aus den Unteransprüchen und der Figurenbeschreibung.

Der Druck, der vom Einspeiseventil an die Ventileinrichtung für die Antiblockierregelung gelegt wird, kann der Druck der Druckversorgung selbst sein, ist aber vorzugsweise der mittels eines Bremssteuerventils vom Druck der Druckversorgung abgeleitete Vordruck mit dem der oder die Kolben des Hauptbremszylinders beaufschlagt werden. Das Einspeiseventil kann dabei den Hauptbremszylinder während der Antiblockierregelung von den Antiblockierregelventilen abtrennen oder aber auch den Druck zusätzlich an die Ventile anschalten.

Anhand der Zeichnungen werden Ausführungsbeispiele der Erfindung näher erläutert. Es zeigen:

Fig. 1    ein Bremssystem, bei dem die Erfindung angewendet ist,

Fig. 2    eine erste detaillierte Überwachungseinrichtung,

Fig. 3    Druckmeßanordnung,

Fig. 4    eine zweite detaillierte Überwachungseinrichtung.

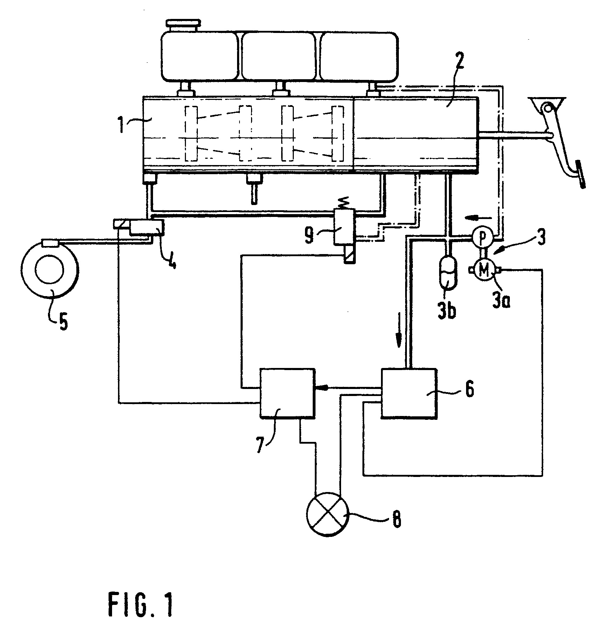

Fig. 1 zeigt ein Bremssystem, das einen Hauptbremszylinder 1, einen Bremskraftverstärker 2, eine Druckversorgung 3 und ein Regelventil 4 für die Bremse eines Rads 5 enthält. Aus Gründen der Vereinfachung ist nur ein Regelkanal dargestellt. Die Anordnung umfaßt weiterhin eine Druckschalteranordnung 6. Die Schaltsignale der Druckschalteranordnung 6 gelangen zu einem elektronischen Steuergerät 7, zu einer Warnlampe 8 und zu einem Pumpenmotor 3a. Die Ausgagssignale des Steuergerätes 7 aktivieren ein Einspeiseventil 9 und das Regelventil 4.

Im vorliegenden Beispiel wird während der Antiblockierregelung über das Einspeiseventil 9 Druckmittel aus dem hydraulischen Bremskraftverstärker dem geschlossenen Radkreis zugeführt, um ein Erschöpfen von Druckmittel durch das Auslassen mittels des Regelventils 4 zu vermeiden.

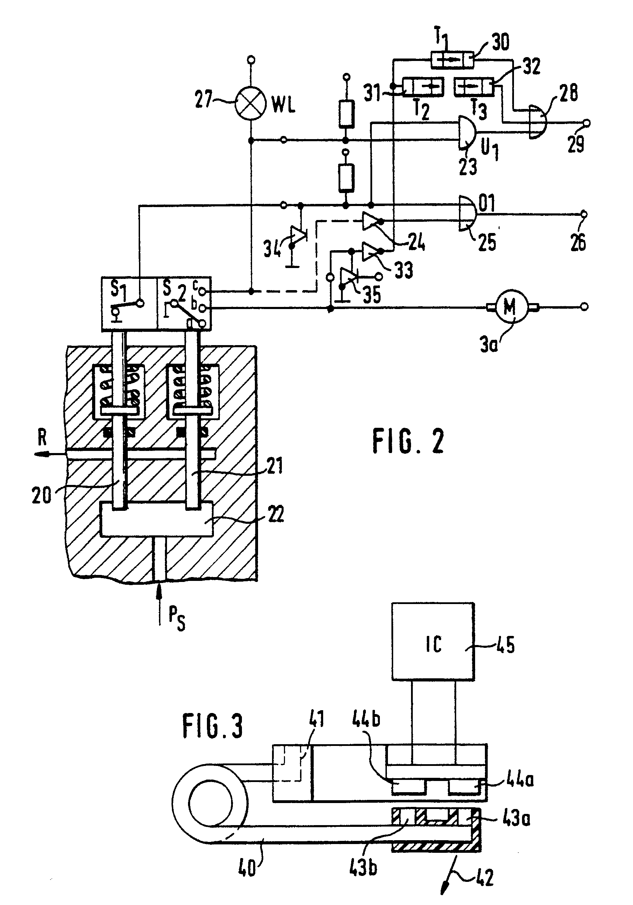

Fig. 2 zeigt ein Ausführungsbeispiel zur sicheren Überwachung der Druckversorgung, um insbesondere zu vermeiden, daß bei Druckabfall das Einspeiseventil und die Regelventile betätigt bleiben und es dadurch zu völligem Druckausfall kommt.

In Fig. 2 sind zwei Druckstößel 20 und 21 gezeigt, die in einem Raum 22 ragen, der mit dem Druckspeicher 3b der Fig. 1 verbunden ist. Bei einem ausreichenden Druck sind die Druckstößel 20 und 21 nach oben ausgelenkt; Kontakte $S_1$ und $S_2$ sollen dann die dargestellten Schaltstellungen einnehmen.

Die Schaltschwellen sind so bemessen, daß bei Absinken des Drucks unter eine erste Schwelle der Kontakt $S_2$ in seine Mittelstellung gelangt, wodurch der Pumpenmotor 3a eingeschaltet und damit der Speicher nachgeladen wird. Sinkt trotz dieses Nachladens der Druck weiter ab, so gelangt der Schalter $S_2$ in die Stellung c; in dieser wird Massepotential an einen Eingang eines Und-Gatters 23 und an den Eingang eines Inverters 24 gelegt, so daß ein Oder-Gatter 25 an seinem mittleren Eingang Signal erhält und ein Schaltsignal an die Klemme 26 liefert, über die z.B. die Antiblockierregelventile und das Einspeiseventil gesperrt werden. Gleichzeitig wird die Warnlampe 27 betätigt.

Sinkt der Druck im Speicher noch weiter ab, so öffnet der Schalter $S_1$ und läßt damit Signale an den Eingängen der Gatter 23 und 25 entstehen. Hat wegen eines Fehlers der Schalter $S_2$ die Ab- schaltung über das Oder-Gatter 25 noch nicht bewirkt, so wird durch dieses Öffnen nun die Abschaltung nachgeholt. Es ist also eine redundante Überwachung der Druckhöhe vorhanden.

Andererseits wird mittels des Und-Gatters 23 überwacht, ob der Schalter $S_2$ funktionsfähig ist. Ist dies nicht der Fall, so weist bei Öffnen des Schal- ters $S_1$ der andere Eingang des Und-Gatters 23, da die Schalterstellung c durch $S_2$ nicht erreicht ist, noch Signal; damit schaltet das Und-Gatter 23 durch und setzt über das Oder-Gatter 28 einen Fehlerspeicher, der an der Klemme 29 angeschlossen ist und der die Regelung bis zu einer Wartung der Anlage abschaltet.

Die Anlage ist aufgrund dieser Ausbildung eigensicher.

Zusätzlich wird hier noch überwacht, ob der Pumpenmotor 3a zu häufig und zu lange angeschaltet wird. Hierzu sind Zeitglieder 30-32 vorgesehen. Läuft z.B. der Motor 3a länger als durch die Verzögerungszeit $T_1$ des Zeitglieds 30 vorgege- ben, so wird ein Schaltsignal erzeugt, das ebenfalls der Fehlerspeicher setzt. Dies wird mittels eines Inverters 33 erreicht. Andererseits wird durch ein das Zeitglied 30 setzendes Signal auch das Zeit-

2

glied 31 gesetzt, das dann sofort ein Signal abgibt und nach Abfall des Eingangssignals sein Ausgangssignal um die Zeit $T_2$ verlängert. Die Zeitkonstante $T_2$ des Zeitglieds 31 ist so bemessen, daß bei normaler Einschaltfrequenz der Pumpe das Ausgangssignal des Zeitglieds 31 beendet ist, bevor die Pumpe erneut eingeschaltet wird. Damit wird das Zeitglied 32 bei Normalbetrieb jeweils bei Pumpeneinschaltung neu gesetzt. Seine Zeitkonstante $T_3$ ist so gewählt, daß es erst ein Ausgangssignal liefert, wenn die Pumpe z.B. ein- oder zweimal hintereinander in kürzerem Zeitabstand als bei Normalbetrieb angeschaltet wurde. Die Zeitkonstante ist also größer als die bei Normalbetrieb übliche Einschaltdauer der Pumpe plus dem bei Normalbetrieb üblichem Abstand zwischen zwei Einschaltphasen bzw, dem Zweifachen dieser Summe. Damit wird am Ausgang der Reihenschaltung der Zeitglieder 31 und 32 ein Signal nur erzeugt, wenn das Zeitglied 31 ein Signal abgibt, das wegen der Zeitkonstante $T_2$ und der zu schnellen Wiederanschaltung der Pumpe die Zeitdauer $T_3$ übersteigt.

Die Überwachungsschaltung der Fig. 2 läßt sich durch Einkoppeln von Signalen über die Verstärker 34 und 35 jederzeit überprüfen.

Die Plausibilitätsprüfung an Und Gatter 23 der Fig. 2 setzt voraus, daß sich die Toleranzbänder der Überwachungsschwellen S1 und S2c nicht überlappen, so daß bei Ansprechen von S1, S2 c bereits sicher geschaltet hat, was zu Toleranzproblemen führen kann, da sich die Abschaltschwellen aus Sicherheitsgründen oberhalb des Speichervorladedrucks befinden müssen.

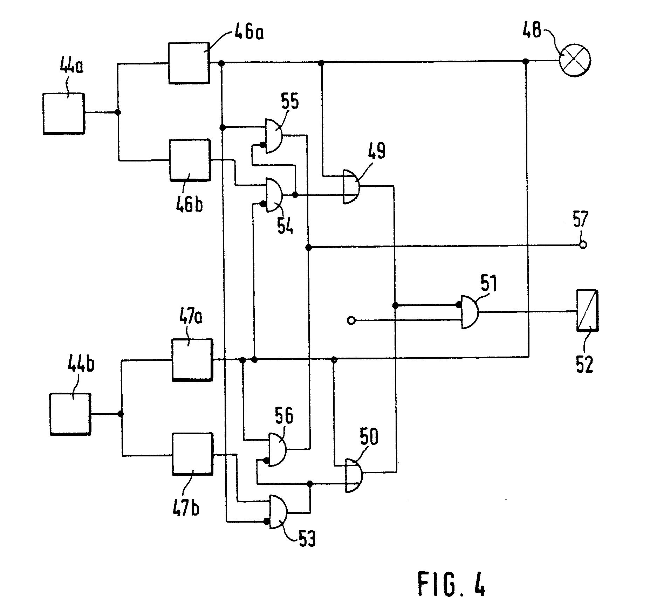

Das weitere Ausführungsbeispiel der Fig. 3 und 4 vermeidet diesen Nachteil. Die Schaltung basiert auf einer redundanten Druckmessung mittels Bourdon-Rohr und Hall-Elemente. Die Schaltschwellen sind mittels Komparatoren realisiert.

Fig. 3 zeigt die Messung im Prinzip. Mit 40 ist der als Bourdon-Rohr ausgebildete Druckmesser bezeichnet, der am Anschlußteil 41 an die Druckleitung angeschlossenen und dessen unteres Rohrteil bei Druckvariation entsprechend dem Pfeil 42 mehr oder weniger weit ausgelenkt wird. Damit wird auch der Abstand zwischen mit dem Rohr verbundenen Magneten 43a und b und Hall-Sensoren 44a und b variiert und damit auch deren Ausgangssignale. Diese Signale werden einer Auswerteschaltung 45 zugeführt.

Diese ist zusammen mit den Hall-Sensoren 44a und b in Fig. 4 dargestellt. Jeder Sensor 44a und b ist mit zwei Schwellwertschaltern 46a und b bzw. 47a und b verbunden, die bei Erreichen bestimmter Signalgrößen ein Ausgangssignal abgeben. Die Schaltschwellen der Schwellwertschalter sind so gelegt, daß z.B. die Schwellwertschalter 46a und 47a (auch unter Berücksichtigung von Toleranzen), unterhalb eines Grenzwertes von z.B. 100 bar (Speichervorladedruck) und die Schwellwertschalter 46b und 47b unterhalb eines niedrigeren Grenzwertes von z.B. 90 bar ein Signal abgeben.

Gibt einer oder beide Grenzwertschalter ein Signal ab, so wird eine Warnlampe 48 angesteuert und über Oder-Gatter 49 und/oder 50 und mittels des Und-Gatters 51 die Stromversorgung eines Relais 52 gesperrt. Gleichzeitig wird über Und-Gatter 55, 56 ein Signal auf Leitung 57 gegeben, was zu einer Abschaltung des ABS-Systems führt. Hierdurch wird die Stromversorgung der ABS-Ventile unterbrochen und damit Druckverbrauch redundant unterbunden, bis sich wieder ein ausreichender Druck aufgebaut hat.

Mit den Schwellwertgebern 46b und 47b wird überwacht, ob die Schwellwertschalter 46a und 47a funktionsfähig sind. Dies geschieht mittels Und-Gatter 53 und 54, in denen folgende Verknüpfungen vorgenommen werden:

$$S_{47b} \cdot \overline{S_{46a}}$$
$$bzw. \quad S_{46b} \cdot \overline{S_{47a}}$$

Gibt eines der Und-Gatter 53 oder 54 aufgrund einer solchen Signalkombination ein Fehlersignal ab, so wird wieder über eines der Oder-Gatter 49 und 50 eine Abschaltung des Ventilrelais 52 ausgelöst. Gleichzeitig werden jedoch Und-Gatter 55 und 56 gesperrt. Damit verschwindet das Signal an Klemme 57, was bei abgeschaltetem Relais 52 als Systemfehler gewertet wird. Damit wird das ABS-System bis zu einem Eingriff von außen (Wartung) gesperrt und eventuell ein Fehlerspeicher gesetzt.

**Ansprüche**

1. Überwachungseinrichtung für eine aus Pumpe (3a) und Hydraulikspeicher (3b) bestehende Druckversorgung (3) in einem mit einem Antiblockierregelsystem versehenen Fahrzeugbremssystem (1, 2, 5), das wenigstens einen geschlossenen Bremskreis aufweist, in den wenigstens eine bei Blockierneigung betätigte Ventileinrichtung (4) zur Variation des Bremsdrucks eingeschaltet ist, wobei während der Antiblockierregelung mittels eines Einspeiseventils (9) der Druck der Druckversorgung oder ein davon abgeleiteter Druck an die Ventileinrichtung (4) angeschaltet wird, und wobei die Überwachungseinrichtung eine der Druckversorgung (3) zugeordnete Druckschaltereinrichtung (6) enthält, die bei Unterschreiten einer vorgegebenen Druckschwelle ein Warn- (an 8) und/oder Schaltsignal für die Abschaltung der Druckeinspeisung (9) und der Ventileinrichtung (4) erzeugt, dadurch gekennzeichnet, daß die Druckschaltereinrichtung (6) zwei bei unterschiedlichen Druckpegeln betätigbare Schalter S$_1$, S$_2$; 43a 44a, 43b 44b) aufweist und daß eine solche Verschaltung der Druckschalter (S$_1$, S$_2$; 43, 44) vorgesehen ist, daß ein erstes Warn- und/oder Schaltsignal bei Unterschreiten der oberen Schwelle und ein zweites Warn- und/oder Schaltsignal erzeugt wird, wenn der Druckschalter (S$_1$) mit der niedrigeren Schwelle anspricht, ohne daß der Druckschalter (S$_2$) mit der höheren Schaltschwelle angesprochen hat.

2. Überwachungseinrichtung nach Anspruch 1, dadurch gekennzeichnet, daß die Druckschaltereinrichtung (6) zwei dem Druck der Druckversorgung (3) ausgesetzte Schaltstößel aufweist, denen davon betätigte Schalter (S$_1$, S$_2$) zugeordnet sind.

3. Überwachungseinrichtung nach Anspruch 1, dadurch gekennzeichnet, daß zur Druckmessung ein Bourdon-Rohr (40) vorgesehen ist, und daß zwischen dem festen und beweglichen Teil dieses Rohres zwei Schalter (43 und 44) wirksam sind.

4. Überwachungseinrichtung nach einem der Ansprüche 1-3, dadurch gekennzeichnet, daß die Schalter (43, 44) als Annäherungsschalter ausgebildet sind, insbesondere Hall-Sensoren sind.

5. Überwachungseinrichtung nach Anspruch 2, dadurch gekennzeichnet, daß einer der zu betätigenden Schalter (S$_1$ oder S$_2$) bei Unterschreiten der zugehörigen Schwelle öffnet und der andere schließt.

6. Überwachnugseinrichtung nach einem der Ansprüche 1-5, dadurch gekennzeichnet, daß jedem Schalter zwei Schaltschwellen (46a und bzw. 47a und b) zugeordnet sind.

7. Überwachungseinrichtung nach Anspruch 6, dadurch gekennzeichnet, daß das zweite Schaltsignal erzeugt wird, wenn einer der Schalter durch seine niedrigere Druckschwelle (46b bzw. 47b) anspricht, ohne daß der andere Schalter durch seine höhere Druckschwelle angesprochen hat.

8. Überwachungseinrichtung nach einem der Ansprüche 1-7, dadurch gekennzeichnet, daß das erste Schaltsignal das Antiblockierregelsystem für die Länge seines Vorhandenseins außer Betrieb setzt, daß jedoch das zweite Schaltsignal das Antiblockierregelsystem auf Dauer abschaltet.

9. Überwachungseinrichtung nach Anspruch 6, dadurch gekennzeichnet, daß jeweils das bei der niedrigen Schaltschwelle (46b oder 47b) eines Schalters (44a, 44b) erzeugte Signal mit dem Signal der höheren Schaltschwelle (47a bzw. 46a) des anderen Schalters (44a, 44b) verglichen wird.

10. Überwachungseinrichtung nach einem der Ansprüche 1-9, dadurch gekennzeichnet, daß dem Pumpenmotor (3a) ein Zeitglied (39) zugeordnet ist, das ein Schaltsignal erzeugt, wenn der Pumpenmotor (3a) länger als eine vorgegebene Zeit (T$_1$) eingeschaltet ist.

11. Überwachungseinrichtung nach einem der Ansprüche 1-10, dadurch gekennzeichnet, daß dem Pumpenmotor eine Zeitgliederkombination (31 und 32) zugeordnet ist, die nach einer Zeit T$_3$ ein Schaltsignal erzeugt, wenn der Pumpenmotor (3a) ein oder mehrfach nach Ende einer Einschaltperiode vor Ablauf einer vorgegebenen Zeit T$_2$ erneut eingeschaltet wird.

**Claims**

1. Monitoring arrangement for a pressure supply (3) comprising a pump (3a) and hydraulic accumulator (3b) in a vehicle brake system (1, 2, 5) which is provided with an anti-skid control system and has at least one closed brake circuit into which at least one valve arrangement (4), actuated in the event of a tendency to lock up, is inserted for the purpose of varying the brake pressure, the pressure of the pressure supply or a pressure derived therefrom being fed to the valve arrangement (4) during the anti-skid control by means of a feed valve (9), and the monitoring device containing a pressure-switch arrangement (6) which is assigned to the pressure supply (3) and, when the pressure falls below a predetermined pressure threshold, produces a warning signal (at 8) and/or switching signal for switching off the pressure feed (9) and the valve arrangement (4), characterised in that the pressure-switch arrangement (6) has two switches (S$_1$, S$_2$; 43a 44a, 43b 44b) actuable at different pressure levels and in that the interconnection of the pressure switches (S$_1$, S$_2$; 43, 44) is such that a first warning and/or switching signal is produced when the upper threshold is undershot and a second warning and/or switching signal is produced when the pressure switch ($S_1$) with the lower threshold responds without the pressure switch ($S_2$) with the higher switching threshold having responded.

2. Monitoring device according to Claim 1, characterised in that the pressure-switch arrangement (6) has two switching tappets, which are exposed to the pressure of the pressure supply (3) and to which switches ($S_1$, $S_2$) actuated by them are assigned.

3. Monitoring arrangement according to Claim 1, characterised in that a Bourdon tube (40) is provided for the purpose of pressure measurement and in that two switches (43 and 44) are operative between the fixed and the movable part of this tube.

4. Monitoring arrangement according to one of Claims 1-3, characterised in that the switches (43, 44) are designed as proximity switches, in particular Hall-effect sensors.

5. Monitoring device according to Claim 2, characterised in that one of the switches ($S_1$ or $S_2$) to be actuated opens when the associated threshold is undershot and the other closes.

6. Monitoring arrangement according to one of Claims 1-5, characterised in that two switching thresholds (46a and 47a and b respectively) are assigned to each switch.

7. Monitoring arrangement according to Claim 6, characterised in that the second switching signal is produced when one of the switches responds with its lower pressure threshold (46b or 47b) without the other switch having responded with its higher pressure threshold.

8. Monitoring arrangement according to one of Claims 1-7, characterised in that the first switching signal puts the anti-skid control system out of operation for the duration of its presence but that the second switching signal switches off the anti-skid control system permanently.

9. Monitoring arrangement according to Claim 6, characterised in that the signal produced at the low switching threshold (46b or 47b) of a switch (44a, 44b) is in each case compared with the signal of the higher switching threshold (47a or 46a) of the other switch (44a, 44b).

10. Monitoring arrangement according to one of Claims 1-9, characterised in that the pump motor (3a) is assigned a timing element (39) which produces a switching signal if the pump motor (3a) is switched on for longer than a predetermined time ($T_1$).

11. Monitoring arrangement according to one of Claims 1-10, characterised in that the pump motor is assigned a combination of timing elements (31 and 32) which produces a switching signal after a time $T_3$ if the pump motor (3a) has been switched on again one or more times after the end of an ON period before the expiry of a predetermined time $T_2$.

**Revendications**

1. Dispositif de surveillance pour une alimentation en pression (3) constituée par une pompe (3a) et un accumulateur hydraulique (3b) dans un système de freinage de véhicule (1, 2, 5) muni d'un système de réglage anti-blocage, et qui comporte au moins un circuit de freinage fermé sur lequel est connecté au moins un dispositif de vanne (4) actionné en cas de tendance au blocage pour faire varier la pression de freinage, tandis que pendant la régulation anti-blocage, la pression de l'alimentation en pression ou bien une pression dérivée de celle-ci est branchée au moyen d'une vanne d'alimentation (9) sur le dispositif de soupape (4), et le dispositif de surveillance comprend un dispositif de commutateurs à pression (6) associé à l'alimentation en pression (3) et qui, lors du franchissement vers le bas d'un seuil de pression prédéfini, engendre un signal d'avertissement (en 8) et/ou un signal de commutation pour la mise hors circuit de l'alimentation en pression (9) et du dispositif de soupape (4), dispositif de surveillance caractérisé en ce que le dispositif de commutateurs à pression (6) comporte deux commutateurs ($S_1$, $S_2$; 43a, 44a, 43b, 44b) susceptibles d'être actionnés pour des niveaux de pression différents et qu'il est prévu un branchement des commutateurs à pression ($S_1$, $S_2$; 43, 44) tel qu'un premier signal d'avertissement et/ou de commutation est engendré lors du franchissement vers le bas du seuil supérieur, tandis qu'un second signal d'avertissement et/ou de commutation est engendré lorsque le commutateur à pression ($S_1$) a réagi au seuil le plus bas, sans que le commutateur à pression ($S_2$) ait réagi au seuil de commutation le plus haut.

2. Dispositif de surveillance selon la revendication 1, caractérisé en ce que le dispositif de commutateurs à pression (6) comporte deux poussoirs de commutation soumis à la pression de l'alimentation en pression (3) et auxquels sont associés les commutateurs (S₁, S₂) actionnés par cette pression.

3. Dispositif de surveillance selon la revendication 1, caractérisé en ce qu'il est prévu, pour la mesure de la pression, un tube de Bourdon (40) et qu'entre la partie fixe et la partie mobile de ce tube, sont susceptibles d'agir deux commutateurs (43 et 44).

4. Dispositif de surveillance selon une des revendications 1 à 3, caractérisé en ce que les commutateurs (43, 44) sont réalisés sous la forme de commutateurs de proximité et sont notamment des détecteurs de Hall.

5. Dispositif de surveillance selon la revendication 2, caractérisé en ce qu'un des deux commutateurs à actionner (S₁ ou bien S₂) s'ouvre lors du franchissement vers le bas du seuil considéré, tandis que l'autre se ferme.

6. Dispositif de surveillance selon une des revendications 1 à 5, caractérisé en ce qu'à chaque commutateur sont associés deux seuils de commutation (46a et 46b ou 47a et 47b).

7. Dispositif de surveillance selon la revendication 6, caractérisé en ce que le second signal de commutation est engendré lorsqu'un des commutateurs réagit à son seuil de pression le plus bas (46b ou bien 47b) sans que l'autre commutateur ait réagi à son seuil de pression le plus élevé.

8. Dispositif de surveillance selon une des revendications 1 à 7, caractérisé en ce que le premier signal de commutation met, pendant la durée de sa présence, le système de réglage anti-blocage hors fonctionnement, et que cependant, le second signal de commutation met hors circuit le système de réglage anti-blocage de façon permanente.

9. Dispositif de surveillance selon la revendication 6, caractérisé en ce que, respectivement le signal produit pour le seuil de commutation bas (46b ou 47b) d'un commutateur (44a, 44b) est comparé avec le signal du seuil de commutation plus élevé (47a ou bien 46a) de l'autre commutateur (44a, 44b).

10. Dispositif de surveillance selon une des revendications 1 à 9, caractérisé en ce qu'au moteur (3a) de la pompe est associé un organe de temporisation (39) qui engendre un signal de commutation lorsque le moteur (3a) de la pompe reste en circuit au-delà d'un temps prédéfini (T₁).

11. Dispositif de surveillance selon une des revendications 1 à 10, caractérisé en ce qu'une combinaison d'organes de temporisation (31 et 32) est associée au moteur de la pompe, cette combinaison engendrant après un temps (T₃) un signal de commutation lorsque le moteur (3a) de la pompe est remis en circuit une ou plusieurs fois avant l'écoulement d'un temps prédéfini (T₂) après la fin d'une période de mise en circuit.

FIG. 1

FIG. 2

FIG. 3

8

FIG. 4